# EUROPEAN PATENT APPLICATION

(11) **EP 2 113 847 A2**
(43) Date of publication of application: **04.11.2009**
(21) Application number: 09153784.5
(22) Date of filing: 26.02.2009
(51) Int. Cl.: G06F 17/30, H04N 7/173, H04N 5/445

(54) **Apparatus and method for processing image**

(30) Priority: 28.04.2008 KR 20080039361
(71) Applicant: SAMSUNG ELECTRONICS CO., LTD., Suwon-si, Gyeonggi-do 442-742 (KR)
(72) Inventor: Lee, Sang-hee, Seoul (KR); Kwon, Yong-hwan, Gyeonggi-do (KR); Kim, Won-il, Gyeonggi-do (KR)
(74) Representative: Davies, Robert Ean

(57) **Abstract**

Provided are an image processing apparatus (10) and an image processing method thereof. The image processing apparatus includes: an information reader (17) which collects information related to a search word; and a controller (19) which selects a favorite broadcast depending on a viewing pattern and provides the information reader with the search word corresponding to the favorite broadcast.

## Description

Apparatuses and methods consistent with the present invention relate to image processing, and more particularly, but not exclusively to an image processing apparatus with an information reader capable of collecting information through the Internet and an image processing method thereof.

In general, an image processing apparatus receives a video signal from an external device and displays an image based on the video signal. Image processing apparatuses have recently been developed not only to receive the video signal from a video signal source such as a broadcasting station, a server, etc., but also to receive additional information by interactive communication with the video signal source through Ethernet, the Internet, etc. That is, a user can obtain desired information through the Internet while watching an image based on a video signal.

Further, a Rich Site Summary (RSS) transmitted via the Internet has recently been applied to the image processing apparatus to thereby afford facility for a user. If a user saves keywords about attractive contents, the RSS publishes information about the keywords, which is regularly updated from a plurality of different Internet sites, within one screen.

However, in a related art image processing apparatus supporting the RSS, a user has to directly type in a search word for obtaining desired information, so that the RSS may be inconvenient to a user.

Accordingly, embodiments of the present invention provide an image processing apparatus capable of providing a search word corresponding to a favorite broadcast automatically according to broadcast viewing patterns of a user, and an image processing method thereof.

Embodiments of the present invention also provide an image processing apparatus capable of automatically providing a search word related to a favorite broadcast selected by a user, and an image processing method thereof.

Embodiments of the present invention also provide an image processing apparatus capable of collecting contents related to a provided search word from a plurality of contents providers and showing the contents to a user, and an image processing method thereof.

According to an aspect of the present invention, there is provided an image processing apparatus including: an information reader which collects information related to a search word; and a controller which selects a favorite broadcast depending on a viewing pattern and provides the information reader with the search word corresponding to the favorite broadcast.

The selected favorite broadcast may preferably include video information and additional information, and the controller selects the search word from the additional information.

The search word may preferably include at least one of a program name, a broadcasting-station name, a channel number, character information, genre information.

The image processing apparatus preferably further includes a user input unit which selects the favorite broadcast.

The controller may preferably select a broadcast, of which a viewing time is greater than a reference time, as the favorite broadcast.

The controller may preferably select a broadcast, of which the number of viewing times is greater than a reference number of times, as the favorite broadcast.

The information reader may preferably include an RSS reader. The image processing apparatus may preferably further include a communication unit to communicate with a server in which information about the search word is stored,
wherein the information reader collects the information related to the search word through the communication unit.

The information reader may preferably classify and store the search words according to predetermined conditions.

The condition may preferably include at least one of a user, a sort, and a selection method for search word.

The information reader may preferably notify new information if the new information is collected with regard to the search word.

The controller may select the favorite broadcast on the basis of the search word collected in the information reader.

According to another aspect of the present invention, there is provided a method of processing an image in an image processing apparatus that includes an information reader to collect information related to a search word through a network, the method including: selecting a favorite broadcast depending on a viewing pattern; and providing the information reader with the search word corresponding to the favorite broadcast.

The method may preferably further include selecting a search word from additional information contained in the favorite broadcast.

The selecting the favorite broadcast may preferably include allowing a user to input the favorite broadcast.

The selecting the favorite broadcast may include: determining whether a viewing time is greater than a reference time, and selecting a broadcast, of which the viewing time is greater than the reference time, as the favorite broadcast.

The selecting the favorite broadcast may preferably include: determining whether the number of viewing times is greater than a reference number of times, and selecting a broadcast, of which the number of viewing times is greater than the reference number of times, as the favorite broadcast.

The method may preferably further include collecting information related to the search word; and displaying the collected information.

The method may preferably further include notifying new information if the new information is collected with regard to the search word.

The method may preferably further include selecting the favorite broadcast on the basis of the collected search word.

For a better understanding of the invention, and to show how embodiments of the same may be carried into effect, reference will now be made, by way of example, to the accompanying diagrammatic drawings in which:
FIG. 1 is a schematic block diagram of an image processing apparatus according to a first exemplary embodiment of the present invention;
FIG. 2 illustrates an example of an information reader of the image processing apparatus according to the first exemplary embodiment of the present invention;
FIG. 3 illustrates an example of additional information according to an exemplary embodiment of the present invention;
FIG. 4 is a flowchart of an image processing method in the image processing apparatus according to the first exemplary embodiment of the present invention;
FIG. 5 is a schematic block diagram of an image processing apparatus according to a second exemplary embodiment of the present invention;
FIG. 6 illustrates an example of an EPG according to an exemplary embodiment of the present invention; and
FIG. 7 is a flowchart of an image processing method in the image processing apparatus according to the second exemplary embodiment of the present invention.

Below, exemplary embodiments of the present invention will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

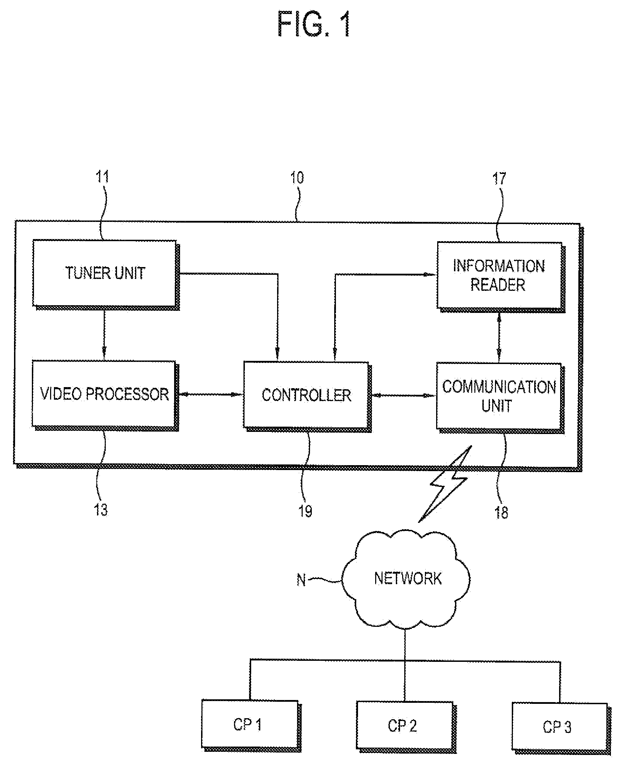

FIG. 1 is a schematic block diagram of an image processing apparatus 10 according to a first exemplary embodiment of the present invention. In the first exemplary embodiment, the image processing apparatus 10 may be achieved by a set- top box that receives a broadcasting signal.

As illustrated in FIG. 1, the image processing apparatus 10 includes a tuner unit 11 which selects the broadcasting signal; a video processor 13 which processes the broadcasting signal selected by the tuner unit 11 to provide a video signal; an information reader 17 which collects information about a search word; a communication unit 18 communicates with one or more contents providers CP1, CP2 and CP3 through a network N; and a controller 19 which provides the search word to the information reader 17 according to viewing patterns of a user.

The network N may be achieved by wire/wireless Internet. The contents provider uses the network N to provide the image processing apparatus 10 with contents, a broadcasting signal and information related to a search word of the information reader 17 (to be described later).

Here, the broadcasting information includes video information and additional information. The video information is information that a user can view through a screen, and the additional information is the other information except the video information. The additional information may include a name of a broadcasting station, a name of a contents provider, a name of a channel, a size of an image, a name of a program, a genre of the program, a resolution, a caption, etc. Further, the additional information may include a summary of a subprogram contained in the program, character information, a name of a shooting place, etc.

The tuner unit 11 may include at least one tuner, a demodulator to demodulate a selected signal, a decoder, a multiplexer, etc. The tuner unit 11 selects a broadcasting signal having a frequency band corresponding to a tuning control signal from the controller 19. The video information, audio information, and various data contained in the broadcasting signal of tuned channel are time-division multiplexed and packetized so that they can be received in the form of a transport stream.

For example, in the case of a digital broadcasting signal, the received broadcasting signal undergoes vestigial sideband demodulation, error correction, etc. in the demodulator, and is then output in the form of the transport steam. At this time, the tuner unit 11 may include an analog tuner and a digital tuner. Alternatively, the tuner unit 11 may include a multi-tuner capable of receiving both analog and digital broadcasting signals.

The video processor 13 processes the video signal decoded by the tuner unit 11 to have a certain format. The video processor 13 converts the video information and the additional information to have formats so as to be displayable on the screen, e.g., into digital red, green and blue (RGB) signals, thereby outputting them to the external device.

The communication unit 18 communicates with the contents providers CP1, CP2 and/or CP3 and receives the contents information from the contents provider CP. Further, if there is a request from the information reader 17 to collect the information about the search word, the communication unit 18 may receive information about the search word from the contents providers CP1, CP2 and/or CP3. In this exemplary embodiment, the communication unit 18 may be achieved by a wire/wireless local area network (LAN) card, a wire/wireless modem, etc. that can perform communication with the contents providers CP1, CP2 and/or CP3 through the network N.

In this exemplary embodiment, the image processing apparatus 10 includes the tuner unit 11 and the communication unit 18 which are independent of each other, but the present invention is not limited thereto. If the video signal is received through the Internet, the tuner unit 11 and the communication unit 18 may be integrated into a single unit. In this case, the communication unit 18 may receive both the video signal and the additional information through the communication with the contents provider CP.

If the image processing apparatus 10 is achieved by an Internet protocol television (IPTV), the tuner unit 10 may include a contents receiver to receive video contents through the Internet.

The information reader 17 collects the information about the search word from the contents providers CP1-CP3 through the communication unit 18. The information reader 17 periodically collects the information about the search word and thus allows a user to check new articles or contents related to the search word without visiting a web site every time when it is frequently updated like news or a blog.

Here, the information reader 17 according to an exemplary embodiment of the present invention may be a reader for an RSS. The RSS is provided in the form of an application program and activated according to a user's selection.

The information reader 17 may be not only the RSS reader but also an application program for collecting the information related to other search words.

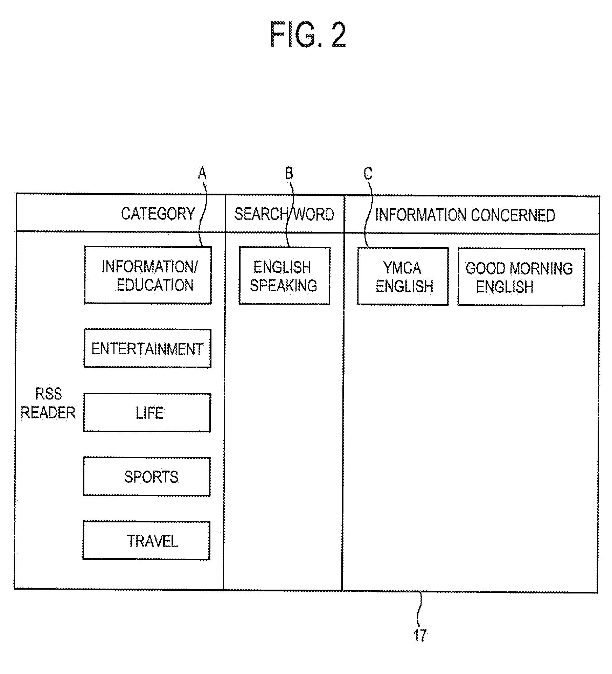

FIG. 2 illustrates an example of the information reader 17 of the image processing apparatus according to the first exemplary embodiment of the present invention. As illustrated therein, the information reader 17 displays a user information related to a plurality of search words through one screen.

The information reader 17 classifies the search words according to categories A such as information/education, entertainment, etc. Each search word B is displayed by the side of the corresponding category A, and the collected information C is displayed by the side of the search word B. The information reader 17 shown in FIG. 2 is exemplarily illustrated, but not limited thereto. Alternatively, the arrangement of the category A, the search word B and the collected information C may be varied as necessary.

When a new search word is provided by the controller 19 or when new information is added with regard to the existing search word, the information reader 17 may mark the category containing the new search word or information with "NEW" or "HOT", so that a user can easily recognize the new search word and collection of the new information.

In this exemplary embodiment, the information reader 17 sorts the search word according to the categories A, but the present invention is not limited thereto. As necessary, the information reader 17 may classify the search word according to users, selections of the search words, web/broadcasting uses, etc.

For example, if the image processing apparatus 10 supports user authentication, the information reader 17 may show different search words according to users. Further, the search word directly input by a user may be displayed separately from the search word automatically registered by the controller 19 according to viewing patterns of a user, so that a user can check each of the search words.

Alternatively, the search word directly input by a user may be displayed separately from the search word automatically input by the controller 19 according to broadcasting patterns.

To this end, the information reader 17 may include a storage unit (not illustrated) to classify and store the search words and information related to the search words.

Although a user does not separately input the search word to the information reader 17, the controller 19 selects user's favorite broadcasts in consideration of the viewing patterns of a user and provides the search words contained in the additional information of the selected favorite broadcast to the information reader 17.

The controller 19 selects the user's favorite broadcasts in consideration of the viewing patterns based on the broadcasting signal selected through the tuner unit 11. To this end, the controller 19 determines whether a viewing time for a broadcast that a user watches is greater than a reference time. When the viewing time for a certain broadcast is greater than the reference time, the controller 19 selects this broadcast as a favorite broadcast.

Here, the favorite broadcast may be selected in consideration of a broadcasting station, a channel, a program, a genre, etc. For example, if the reference time is set to four hours a day, the following cases may be all selected as the favorite broadcast: when a user watches the same program for five hours; when a user watches the same genre such as news regardless of the broadcasting station for five hours; or when a user watches the same genre such as a drama regardless of the broadcasting station for six hours.

The controller 19 counts the viewing time in consideration of the additional information of the broadcasting signal and selects the favorite broadcast on the basis of counting results. Here, the reference time may be set to a default value or directly selected by a user.

The controller 19 may select the favorite broadcast on the basis of the number of viewing times of the broadcast. The controller 19 compares the number of viewing times with regard to the broadcasting station, the channel, the program name, the genre, etc. with a reference number of times, and selects a broadcast, of which the number of viewing times is greater than the reference number of times, as the favorite broadcast. Here, the reference number of times may be selected by a user or set to a default value.

Besides, the controller 19 may select the favorite broadcasts in consideration of both the viewing time and the number of viewing times with regard to a broadcast.

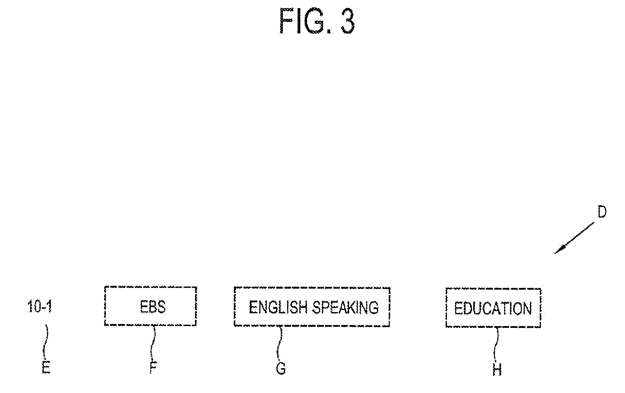

The controller 19 selects the search word on the basis of the additional information of the favorite broadcast selected in consideration of the viewing time, the number of viewing times, etc. For example, if a user watches a program such as "ENGLISH SPEAKING" of "EBS (Korea Educational Broadcasting System)" in excess of the reference time, the controller 19 selects index words on the basis of the additional information D of the "ENGLISH SPEAKING" program as illustrated in FIG. 3 and selects the search word among the index words.

Here, the additional information D of the corresponding program contains a plurality of index words. The index words includes a channel number E, a broadcasting-station name F, a program name G, a program genre H, etc. The controller 19 selects at least one of index words as the search word and provides it to the information reader 17.

Which index word will be selected as the search word by the controller 19 may be set to a default value or selected by a user. That is, the controller 19 may select all index words contained in the additional information D as the search word, and may select the first-ordered index word or the program name as the search word.

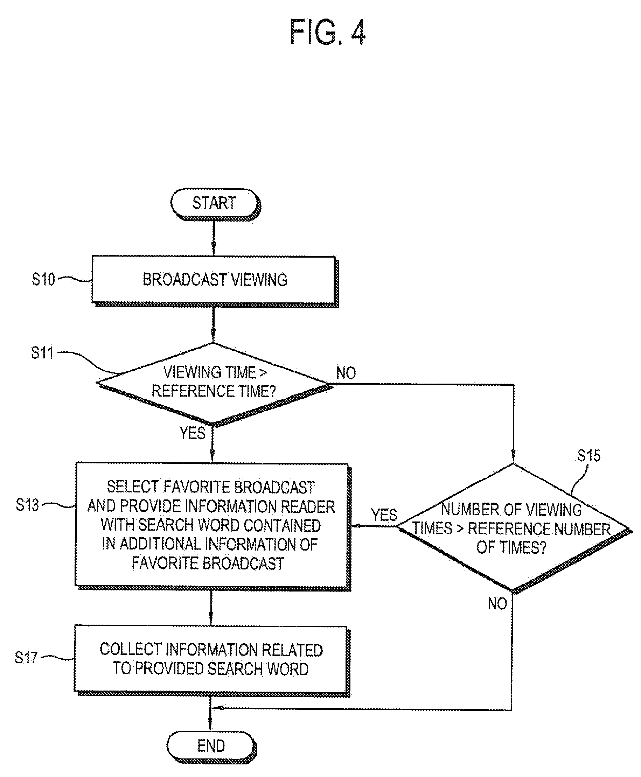

Below, a method of processing an image in the image processing apparatus 10 according to the first exemplary embodiment of the present invention will be described with reference to FIGs. 1 through 4.

First, a user watches a broadcast (S10). Then, the controller 19 counts the viewing time and the number of viewing times according to the index words contained in the additional information of the broadcast that a user watches. The controller 19 determines whether the viewing time of the broadcast is greater than the reference time (S11). If it is determined that the viewing time is greater than the reference time, the controller 19 selects the corresponding broadcast as the favorite broadcast, and provides the search word contained in the additional information of the corresponding broadcast to the information reader 17 (S13). For example, if the viewing time for the "ENGLISH SPEAKING" program illustrated in FIG. 3 is greater than the reference time, the controller 19 may provide either of the program name G (i.e., "ENGLISH SPEAKING") or the program genre H (i.e., "EDUCATION") to the information reader 17.

At this time, the information reader 17 provides the information/education category A with the search word related to the "ENGLISH SPEAKING" G input by the controller 19, and collects the information C related to the search word (S17). As a result of collection, information such as an English academy, an English speaking broadcast, etc. related the "ENGLISH SPEAKING" may be added.

On the other hand, if it is determined that the viewing time for the broadcast is within the reference time, the controller 19 determines whether the number of viewing times for the broadcast is greater than the reference number of times (S15). In results, if it is determined that the number of viewing times for the broadcast is greater than the reference number of times, the search word contained in the additional information of the corresponding broadcast is provided to the information reader (S15).

As described above, in the image processing apparatus 10 according to the first exemplary embodiment of the present invention, the controller 19 automatically provides the search word to the information reader 17 in consideration of the viewing patterns of a user even though a user does not directly input the search word to the information reader 17. Thus, a user can search the information related to the favorite broadcast without visiting the web sites while watching the broadcast.

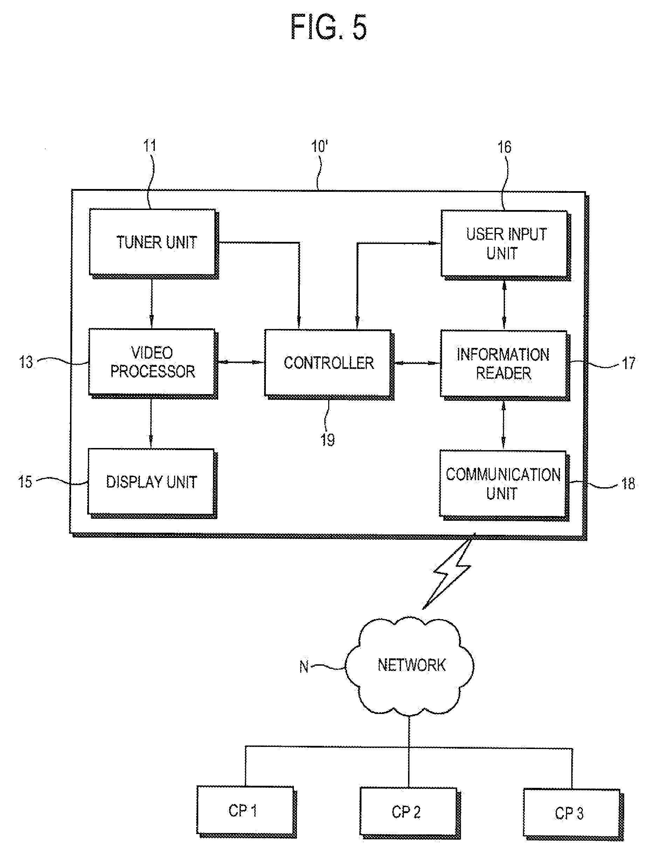

FIG. 5 is a schematic block diagram of an image processing apparatus 10' according to a second exemplary embodiment of the present invention. The image processing apparatus 10' according to the second exemplary embodiment further includes a display unit 15 and a user input unit 16. In the second exemplary embodiment, repetitive descriptions about elements which are the same as those of the first exemplary embodiment will be omitted.

A video processor 13 processes the video signal decoded by a tuner unit 11 to have a format displayable in the display unit 15. Further, the video processor 13 processes the information collected in an information reader 17 to be displayable in the display unit 15.

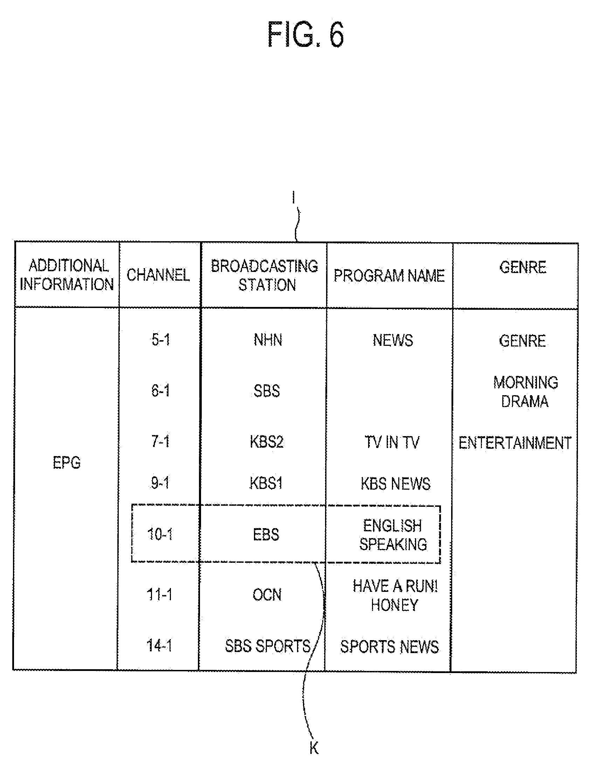

Further, the video processor 13 may display a list of additional information about a plurality of broadcasts through the display unit 15 so that a user can easily receive the additional information. In this exemplary embodiment, the video processor 13 provides the list of the additional information in the form of an electronic program guide (EPG) as illustrated in FIG. 6. The EPG I shows a channel number of each broadcast, a broadcasting station, a program name according to the broadcasting station and time, a genre of a program, etc.

The video processor 13 may process an image based on a broadcasting signal, the information reader 17, and the EPG to be displayed individually or overlapped one another according to a user's selection.

The display unit 15 displays the video signal processed by the video processor 13, the information from the information reader 17 as illustrated in FIG. 2, and the EPG I as illustrated in FIG. 6.

A user can select a favorite broadcast through the user input unit 16. When a user selects one broadcast from the EPG I displayed on the display unit 15 as the favorite broadcast through the user input unit 16, information about the selected favorite broadcast is input to the controller 19. For example, a user may select the "ENGLISH SPEAKING" K corresponding to the channel number of "10-1" from the EPG I as the favorite broadcast. Here, the user input unit 16 may be achieved by a remote controller, an operation panel, or etc. Further, the user input unit 16 may include a hot key for allowing a user to easily select the favorite broadcast.

Through the user input unit 16, a user may select the information reader 17 to be displayed through the display unit 15. That is, the information reader 17 may be activated by a user's selection and displayed through the display unit 15.

The controller 19 provides at least one of index words, contained in the additional information of the corresponding broadcast, as the search word to the information reader 17. As described above, if the "ENGLISH SPEAKING" broadcast corresponding to the channel number of "10-1" is selected as the favorite broadcast, the controller 19 selects at least one among the index words contained in the additional information of the corresponding broadcast as the search word to the information reader 17.

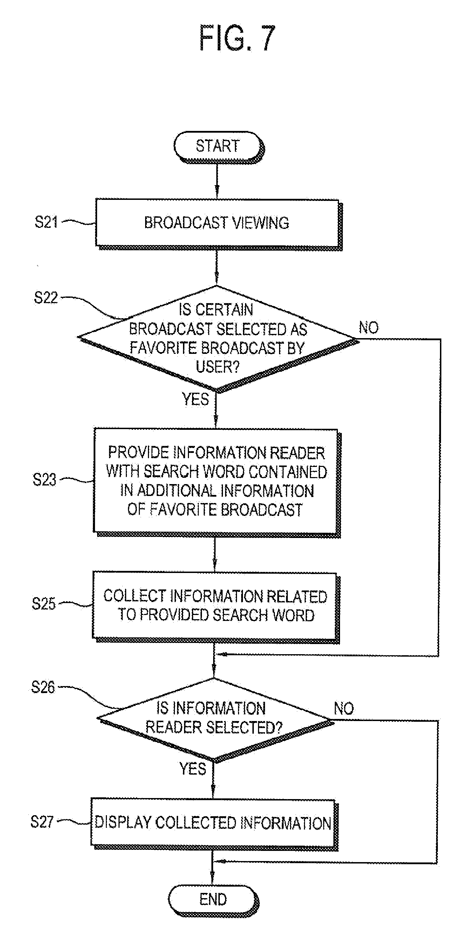

A method of processing an image in the image processing apparatus 10' according to the second exemplary embodiment will be described with reference to FIGs. 5 through 7.

First, a user watches a broadcast through the display unit (S21). If one of the broadcasts illustrated in the EPG I is selected as the favorite broadcast by a user through the user input unit 16 while the user watches the broadcast (S22), the controller 19 provides the information reader 17 with the search word contained in the additional information of the favorite broadcast selected by the user (S23). For example, if the "ENGLISH SPEAKING" broadcast corresponding to the channel number of "10-1" is selected as the favorite broadcast, at least one among the index words corresponding to this broadcast is provided as the search word to the information reader 17.

The information reader 17 collects information about the search word provided by the controller 19 (S25). For example, if a search word of "ENGLISH SPEAKING" is provided, the information reader 17 communicates with a plurality of contents providers (CP) through a communication unit 18 and collects the information related to "ENGLISH SPEAKING." The collected information may be stored in a storage unit (not illustrated).

If a user wants to view the information collected by the information reader 17 while watching the broadcast (S26), the collected information of the information reader 17 may be displayed through the display unit 15 (S27).

As described above, when a user selects a certain broadcast as a favorite broadcast through the EPG, the image processing apparatus according to the second exemplary embodiment provides the index words contained in the additional information of the corresponding broadcast as the search word to the information reader.

Thus, a user can receive desired information without separately input a search word.

In the meantime, if a user releases the favorite broadcast through the EPG I, the controller 19 may request the information reader 17 to delete the provided search word.

Also, if a user directly registers the search word in the information reader 17, the controller 19 may register a broadcast containing the search word as the favorite broadcast.

As described above, according to the exemplary embodiments of the present invention, even though a user does not separately input a search word to an information reader, a favorite broadcast is selected according to viewing patterns of a user, and the search word corresponding to the selected favorite broadcast is provided to the information reader.

Further, according to the exemplary embodiments of the present invention, information about the provided search word is collected and displayed, so that a user can receive the information even during viewing.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus (10) comprising:
an information reader (17) which collects information related to a search word; and
a controller (19) which selects a favorite broadcast depending on a viewing pattern and provides the information reader with the search word corresponding to the favorite broadcast.

2. The image processing apparatus according to claim 1, wherein the favorite broadcast comprises video information and additional information, and
the controller selects the search word from the additional information.

3. The image processing apparatus according to claim 2, wherein the search word comprises at least one of a program name, a broadcasting-station name, a channel number, character information, and genre information.

4. The image processing apparatus according to claim 2 or 3, further comprising a user input unit (16) through which the favorite broadcast is selected.

5. The image processing apparatus according to any of claims 2-4, wherein the controller selects a broadcast, of which a viewing time is greater than a reference time or a number of viewing times is greater than a reference number of times, as the favorite broadcast.

6. The image processing apparatus according to any of claims 2-5, wherein the information reader comprises a Rich Site Summary (RSS) reader.

7. The image processing apparatus according to any of claims 2-6, further comprising a communication unit (18) which communicates with a server which stores information about the search word,
wherein the information reader (17) collects the information related to the search word through the communication unit.

8. The image processing apparatus according to any of claims 2-7, wherein the information reader classifies and stores search words according to predetermined conditions which comprise at least one of a user, a sort, and a selection method for search word.

9. The image processing apparatus according to any preceding claim, wherein if the information reader collects new information with regard to the search word, the information reader provides a notification of the new information.

10. The image processing apparatus according to any preceding claim, wherein the controller selects the favorite broadcast based on the search word collected by the information reader.

11. A method of processing an image in an image processing apparatus that comprises an information reader which collects information related to a search word through a network, the method comprising:
selecting (S13) a favorite broadcast depending on a viewing pattern; and
providing the information reader with the search word corresponding to the favorite broadcast.

12. The method according to claim 11 , further comprising selecting (S23) the search word from additional information contained in the favorite broadcast.

13. The method according to claim 11 or 12, wherein the selecting the favorite broadcast comprises inputting the favorite broadcast via a user input unit of the image processing apparatus.

14. The method according to any of claims 11-13, wherein the selecting the favorite broadcast comprises:
determining (S15) whether a viewing time is greater than a reference time or a number of viewing times is greater than a reference number of times, and
selecting a broadcast, of which the viewing time is greater than the reference time or the number of viewing times is greater than the reference number of times, as the favorite broadcast.

15. The method according to any of claims 11-14, further comprising:
collecting (S25) information related to the search word; and
displaying (S27) the collected information.
